# EUROPÄISCHE PATENTANMELDUNG

(11) **EP 0 941 001 A2**
(43) Veröffentlichungstag der Anmeldung: **08.09.1999**
(21) Anmeldenummer: 99103853.0
(22) Anmeldetag: 27.02.1999
(51) Int. Cl.: H04Q 7/26

(54) **Kommunikations-System und Verfahren zu dessen Betrieb**

(30) Priorität: 05.03.1998 DE 19809336
(71) Anmelder: ROBERT BOSCH GMBH, 70442 Stuttgart (DE)
(72) Erfinder: Kurth, Manfred, 38312 Heiningen (DE); Hinz, Michael, 38302 Wolfenbuettel (DE); Borgmann, Udo, 38302 Wolfenbuettel (DE); Roetsch, Gerald, 38229 Salzgitter (DE); Grote, Helge, 38448 Wolfsburg (DE)

(57) **Zusammenfassung**

Die vorliegende Erfindung betrifft ein Kommunikations-System (100) mit mehreren, miteinander verbundenen Kommunikations-Anlagen (10,12,14), welche jeweils wenigstens eine Telekommunikationsanlage (16,18,20) mit wenigstens einer daran angeschlossener Basisstation (28,30,32) für wenigstens ein drahtloses Endgerät (50,52,54) umfaßt. Hierbei ist ein mit einer jeweiligen Telekommunikationsanlage (16,18,20) verbundenes erstes Mittel (34,36,38) vorgesehen, welches ein vorbestimmtes Anmeldesignal eines individualisierten Endgerätes (50,52,54) aufnimmt, auswertet und an alle andere ersten Mittel (34,36,38) der anderen Telekommunikationsanlagen (16,18,20) und/oder an alle anderen Telekommunikationsanlagen (16,18,20) im Kommunikations-System (100) weiterleitet sowie von allen anderen ersten Mitteln (34,36,38) der anderen Telekommunikationsanlagen (16,18,20) und/oder von allen anderen Telekommunikationsanlagen (16,18,20) im Kommunikations-System (100,200) Anmeldesignale von individualisierten Endgeräten (50,52,54) aufnimmt, und ferner ist ein zweites Mittel vorgesehen, welches vom ersten Mittel (34,36,38) bei Eingang eines Verbindungswunsches zu einem individualisierten Endgerät (50,52,54) angesteuert eine Verbindung zu derjenigen Kommunikations-Anlage (10,12,14) herstellt, von welcher zuletzt ein Anmeldesignal dieses individualisierten Endgerätes (50,52,54) eingegangen ist.

## Beschreibung

### Technisches Gebiet

Die Erfindung betrifft ein Kommunikations-System mit mehreren, miteinander verbundenen Kommunikations-Anlagen, welche jeweils wenigstens eine Telekommunikationsanlage mit wenigstens einer daran angeschlossener Basisstation für wenigstens ein drahtloses Endgerät umfaßt, gemäß dem Oberbegriff von Anspruch 1. Die Erfindung betrifft ferner ein Verfahren zum Betreiben eines Kommunikations-Systems mit mehreren, miteinander verbundenen Kommunikations-Anlagen, welche jeweils wenigstens eine Telekommunikationsanlage mit wenigstens einer daran angeschlossener Basisstation für wenigstens ein drahtloses Endgerät aufweisen, gemäß dem Oberbegriff von Anspruch 12.

### Stand der Technik

Bei Kommunikationssystemen für weitläufige Areale, wie beispielsweise betriebsinterne Kommunikationssysteme, in denen die das Kommunikationssystem benutzenden Personen nicht lokal an einem Platz bleiben, sondern schnell und häufig ihren Aufenthaltsort im Betriebsgelände wechseln bzw. verändern, ergibt sich das Problem der telefonischen Erreichbarkeit dieser Personen. Eine bekannte Lösung ist beispielsweise ein drahtgebundenes Telefonsystem kombiniert mit einem Funkrufsystem, wobei der Funkruf eine gewünschte Person zum Anruf einer vorbestimmten oder übertragenen Nummer auffordert. Derartige Systeme sind jedoch aufwendig und umständlich, und es vergeht eine nicht akzeptabel lange Zeit, bis schließlich eine Kommunikationsverbindung zu einer gewünschten Person hergestellt ist.

Eine andere Lösung benutzt drahtlose Telefone, welche jeweils mit einer Basisstation kommunizieren. Hierbei ergibt sich jedoch das Problem, daß die Reichweite der Funkverbindung zwischen Basisstation und drahtlosem Telefon sehr eingeschränkt ist. Dazu ist vom Anmelder eine Lösung bekannt, welche ein drahtloses Telefonsystem mit einer klassischen Funkruftechnik kombiniert, so daß ein Benutzer auch ohne Funkkontakt zu seiner Basisstation des drahtlosen Telefonsystems Mitteilungen über den Funkruf mit dem Vorteil entsprechend größerer Reichweite empfangen kann.

### Darstellung der Erfindung, Aufgabe, Lösung, Vorteile

Es ist Aufgabe der vorliegenden Erfindung, ein Kommunikations-System der obengenannten Art und ein Verfahren zu dessen Betrieb zu verbessern.

Diese Aufgabe wird durch ein Kommunikations-System der o.g. Art mit den in Anspruch 1 gekennzeichneten Merkmalen und durch ein Verfahren der o.g. Art mit den in Anspruch 12 angegebenen Verfahrensschritten gelöst.

Dazu ist es erfindungsgemäß vorgesehen, daß ein mit einer jeweiligen Telekommunikationsanlage verbundenes erstes Mittel vorgesehen ist, welches ein vorbestimmtes Anmeldesignal eines individualisierten Endgerätes aufnimmt, auswertet und an alle andere ersten Mittel der anderen Telekommunikationsanlagen und/oder an alle anderen Telekommunikationsanlagen im Kommunikations-System weiterleitet sowie von allen anderen ersten Mitteln der anderen Telekommunikationsanlagen und/oder von allen anderen Telekommunikationsanlagen im Kommunikations-System Anmeldesignale von individualisierten Endgeräten aufnimmt, und daß ein zweites Mittel vorgesehen ist, welches vom ersten Mittel bei Eingang eines Verbindungswunsches zu einem individualisierten Endgerät angesteuert eine Verbindung zu derjenigen Kommunikations-Anlage herstellt, von welcher zuletzt ein Anmeldesignal dieses individualisierten Endgerätes eingegangen ist.

Bei einem erfindungsgemäßen Verfahren sind folgende Schritte vorgesehen:
(a) Aussenden eines Anmeldesignals von einem individualisierten Endgerät an eine erste Telekommunikationsanlage einer ersten Kommunikations-Anlage, in dessen Funkbereich sich das individualisierte Endgerät momentan befindet, und
(b) Aktivieren einer Rufumleitung in allen anderen, mit der ersten Kommunikations-Anlage verbundenen Kommunikations-Anlagen.

Dies hat den Vorteil, daß ein komfortables Anwählen eines gewünschten individualisierten Endgerätes zu Verfügung steht, ohne daß eine wählende Person wissen muß, in welchem Funkbereich bezüglich der Kommunikations-Anlagen sich das gewünschte individualisierte Endgerätes befindet. Ferner ergeben sich sehr kurze Verbindungsaufbauzeiten dadurch, daß die jeweilige Information darüber, bei welcher Kommunikations-Anlage ein individualisiertes Endgerät gerade angemeldet ist, dezentral in allen Kommunikations-Anlagen vorliegt.

Vorzugsweise Weitergestaltungen des Kommunikations-Systems sind in den Ansprüchen 2 bis 11 beschrieben. Eine vorzugsweise Weitergestaltung des Verfahrens ist in Anspruch 13 angegeben.

Eine große Flexibilität bezüglich Funktionsumfang des Kommunikations-Systems erzielt man dadurch, daß das erste Mittel ein Kommunikationscontroller (KC), insbesondere ein Personalcomputer (PC) ist.

Zweckmäßigerweise ist das zweite Mittel eine Rufumleitung und/oder eine "Follow-Me"-Funktion. Dies erzielt einen sofortigen Verbindungsaufbau mit einem gewünschten Endgerät ohne wesentliche Zeitverzögerung in der Art einer "Follow-Me"-Funktion, d.h. die Anrufe für ein bestimmtes individualisiertes Endgerät folgen diesem an dessen momentanen Aufenthaltsort bzw. zu derjenigen Telekommunikationsanlage, bei der dieses individualisierte Endgerät gerade mittels des vorbestimmten Anmeldesignals angemeldet bzw. eingebucht ist voll automatisch und ohne zusätzliche Aktionen des Benutzers dieses individualisierten Endgerätes.

In einer bevorzugten Ausführungsform ist das Endgerät über eine individuelle Telefonnummer in dem Kommunikations-System individualisiert.

Ein zusätzlicher Verbindungsweg zu einer gewünschten Person im Bereich des Kommunikations-Systems steht dadurch zur Verfügung, daß jede Kommunikations-Anlage zusätzlich wenigstens einen Drahtapparat aufweist.

In einer besonders bevorzugten Ausführungsform sind die Kommunikationscontroller in einem draht- oder funkgestützten Datennetz miteinander verbunden. In vorteilhafter Weise ist optional zusätzlich wenigstens eine, sind insbesondere alle, Telekommunikationsanlagen mit wenigstens einer externen Amtsleitung verbunden.

Ein hoch flexibles Kommunikations- und Datennetz erzielt man dadurch, daß wenigstens zwei, insbesondere alle, Telekommunikationsanlagen über ein draht- oder funkgestütztes Netz miteinander verbunden sind, welches insbesondere ein ISDN-Netz ist.

Zweckmäßigerweise ist der Verbindungswunsch ein Telefonanruf, ein Paginganruf und/oder ein Datenanruf.

### Kurze Beschreibung der Zeichnungen

Nachstehend wird die Erfindung anhand der beigefügten Zeichnungen näher erläutert. Diese zeigen in
- Fig. 1: eine erste bevorzugte Ausführungsform eines erfindungsgemäßen Kommunikations-Systems,
- Fig. 2: eine zweite bevorzugte Ausführungsform eines erfindungsgemäßen Kommunikations-Systems,
- Fig. 3: eine schematische Veranschaulichung eines erfindungsgemäßen Verfahrens und
- Fig. 4: ein schematisches Blockschaltbild eines erfindungsgemäßen Kommunikations-System.

### Bester Weg zur Ausführung der Erfindung

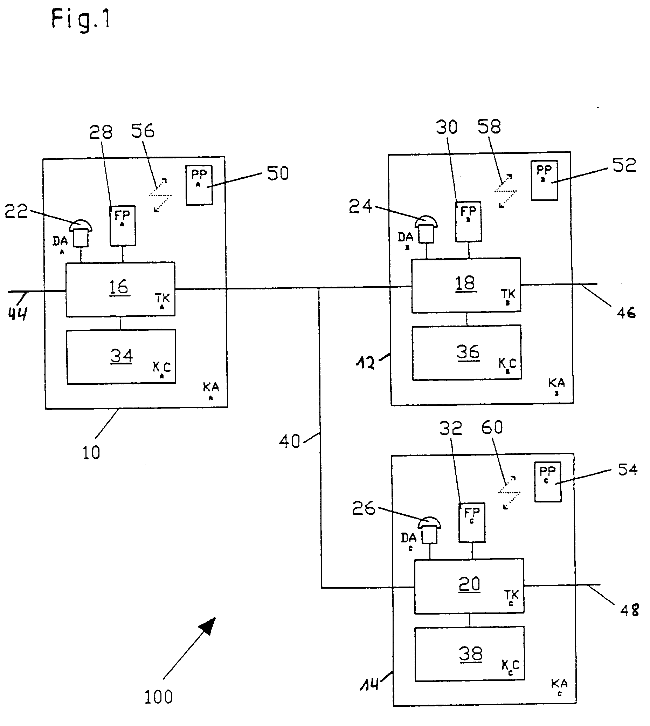

Die in Figur 1 dargestellte erste bevorzugte Ausführungsform eines erfindungsgemäßen Kommunikations-Systems (KS) 100 umfaßt mehrere Kommunikations-Anlagen (KA) 10, 12 , 14, welche jeweils eine Telekommunikationsanlage (TK) 16, 18, 20 aufweisen. Mit den jeweiligen Telekommunikationsanlagen (TK) 16, 18, 20 sind Drahtapparate (DA) 22, 24, 26, Basisstationen (fixed part FP) 28, 30, 32 und Kommunikationscontroller (KC) 34, 36, 38 verbunden. Die Darstellung von drei TA 10, 12, 14 ist lediglich beispielhaft, erfindungsgemäß ist jede beliebige Anzahl von KA 10, 12, 14 möglich. Dasselbe gilt für die DA 22, 24, 26, die FP 28, 30, 32 und die KC 34, 36, 38. Jede TK 16, 18, 20 ist beispielsweise mit einer externen Amtsleitung 44, 46, 48 verbunden. Hierin wird lediglich aus Veranschaulichungsgründen der Ausdruck "Kommunikationscontroller" verwendet. Dieser ist allgemein als zu verstehen und kann beispielsweise als Personalcomputer oder auch als Mikroprozessorsystem ausgebildet sein. Dementsprechend wird nachfolgend der im Ausführungsbeispiel vorgesehene Personalcomputer auch mit "KC" (Kommunikationscontroller) (34,36,38) bezeichnet.

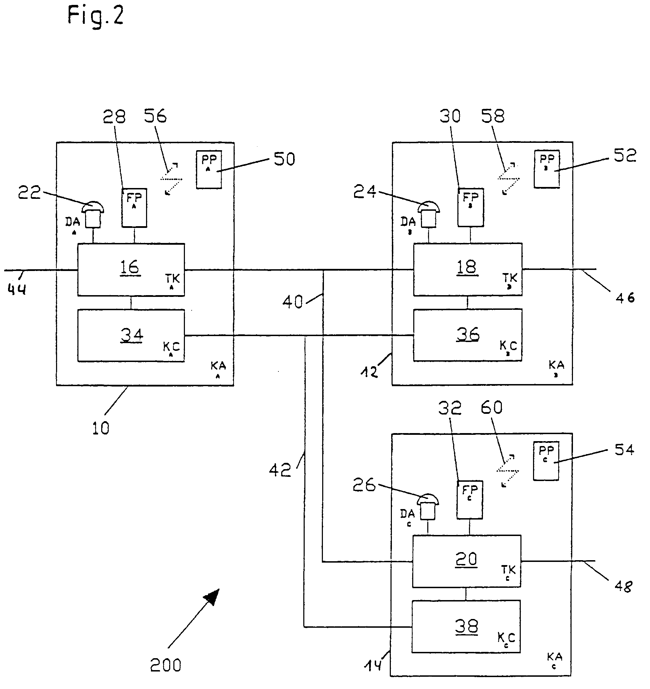

Ein draht- oder funkgestütztes Leitungsnetz 40 verbindet die TK 16, 18, 20 miteinander. Optional sind in einer zweiten bevorzugten Ausführungsform 200 auch die KC 34, 36, 38 untereinander mit einem separaten Leitungsnetz 42, wie in Fig. 2 dargestellt, verbunden.

In jeder KA 10, 12, 14 ist ein individualisiertes Endgerät (portable part, PP) 50, 52, 54 über die FP 28, 30, 32 und eine jeweilige Funkverbindung 56, 58, 60 mit der jeweiligen TK 16, 18, 20 verbunden. Die Endgeräte sind beispielsweise mittels einer Telefonnummer innerhalb des KS 100, 200 individualisiert, d.h. jedem Endgerät 50, 52, 54 ist eindeutig eine Telefonnummer zugeordnet.

Die Funkübertragung über die Funkstrecken 56, 58 und 60 erfolgt beispielsweise gemäß dem DECT-Standard (Digital European Cordless Telecommunication). Dieser Standard basiert auf TDMA (Time Division Multiple Access) und wird typischerweise bei schnurlosen Telefonen verwendet. Im DECT-Standard sind Kanal- und Datenstrukturen sowie Lokalisiserungsmeldungen, sogen. Location-Registrations festgelegt. Der DECT-Standard erlaubt, daß über Systemoperator-Zuweisungen ein mobiles Endgerät 50, 52, 54 in mehreren KA 10, 12, 14 zugleich registriert und zugeordnet sein kann, sogen. Zuordnung von Locations. Weiterhin ist im DECT-Standard beschrieben, daß das mobile Endgerät 50, 52, 54 bei der Inbetriebnahme oder bei Wechsel der Location eine Location Registration-Meldung erzeugt, die in der dem Endgerät 50, 52, 54 zugeordneten KA 10, 12, 14 auswertbar ist.

Die Location-Registration-Meldung kann manuell durch einen Benutzer oder automatisch durch das mobile Endgerät 50, 52, 54 erzeugt und gesendet werden. Die Basisstationen (FP) 28, 30, 32 sind entsprechend mit der TK 16, 18, 20 verbunden.

Die KA 10, 12, 14 befinden sich üblicherweise an unterschiedlichen Standorten (Locations). Die KA 10, 12, 14 können dabei über bekannte Leitungswege mit analogen oder digitalen Übertragungsverfahren, beispielsweise ISDN-Technik (Integrated Services Digital Network), untereinander über das Leitungsnetz 40 kommunizieren. Beispielsweise kommen hier QSIG-Funktionen zum Einsatz. Über die Amtsleitungen 44, 46, 48 können beispielsweise Datenverbindungen aufgebaut und hierüber Informationen zwischen den miteinander verbundenen KA 10, 12, 14 ausgetauscht werden.

Der KC 34, 36, 38 einer jeden KA 10, 12, 14 führt Steuerfunktionen, wie beispielsweise Rufumleitung setzen/löschen, aus.

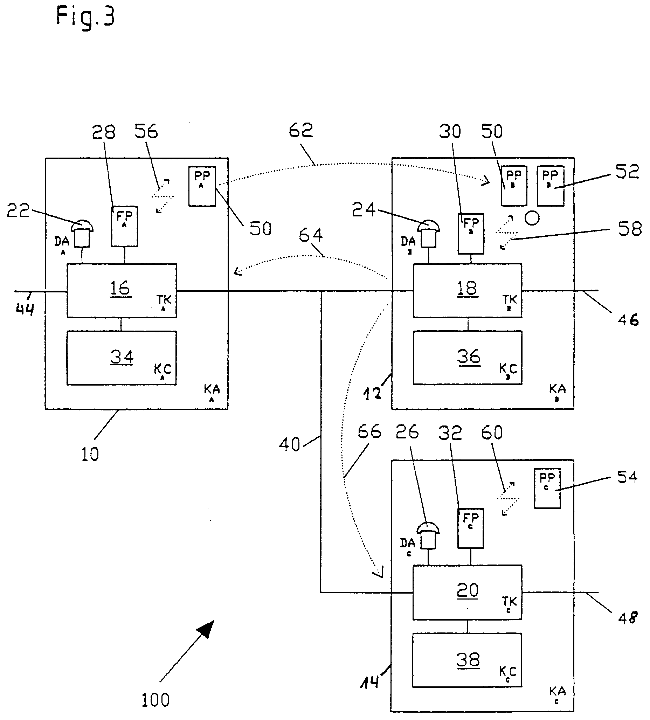

Fig. 3 veranschaulicht einen erfindungsgemäßen Betrieb am Beispiel des KS 100 von Fig. 1. Das Endgerät 50 verläßt die KA 10 und wechselt zur KA 12 (Pfeil 62). Dabei endet die Funkverbindung 56 zu FP 28, und es baut sich stattdessen die Funkverbindung 58 zur FP 30 auf.

Das Endgerät 50 sendet ein Anmeldesignal und meldet sich auf diese Weise bei der TK 18 an. Dies erfolgt beispielsweise automatisch oder manuell. Die TK 18 erkennt dieses Anmeldesignal als dasjenige vom Endgerät 50 und meldet dies dem KC 36. KA 12 aktiviert daraufhin (Pfeile 64,66), beispielsweise mittels KC 36 oder über Leitung 40, eine erforderliche (externe) Rufumleitung für das Endgerät 50 von KA 10 zu KA 12 und von KA 14 zu KA 12.

Somit werden alle an das Endgerät 50 gerichteten Telefon- und Datendienstanforderungen an KA 12 weitergeleitet und erreichen das Endgerät 50 über die KA 12. Weder der Benutzer des Endgerätes 50 noch ein Anrufer für diesen Benutzer müssen sich dabei darum kümmern, in welchem KA 10, 12 oder 14 sich das Endgerät 50 gerade befindet.

Erfindungsgemäß werden die Location Registration-Informationen standortübergreifend im KS 100, 200 verteilt und liegen an jedem KA 10, 12, 14 vor. Somit ist auf einfache Weise für jedes mobile Endgerät 50, 52, 54 eine "Follow-Me"-Funktion bzw. eine Rufumleitung zu dem tatsächlichen aktuellen Aufenthaltsort realisiert bzw. geschaltet, von welchem sich das Endgerät 50, 52, 54 per Location-Registration als systemanwesend gemeldet hat.

Dieses geschieht dadurch, daß die KC 34, 36, 38 die Informationen der Location-Registration-Meldung bzw. des Anmeldesignals über die oben beschriebenen Wege austauschen. Diejenige KA 10, 12, 14, in der das mobile Endgerät 50, 52, 54 seine Location-Registration-Meldung ausgesendet hat, aktiviert auf diese Weise alle erforderlichen Rufumleitungen in den anderen KA 10, 12, 14, so daß dieses Endgerät 50, 52, 54 auch für alle anderen KA-Standorte erreichbar geschaltet ist.

Dadurch ist eine komfortable und schnelle Erreichbarkeit aller mobilen Endgeräte ohne Benutzerwissen bzgl. eines momentanen Standortes eines gewünschten mobilen Endgerätes 50, 52, 54 realisiert.

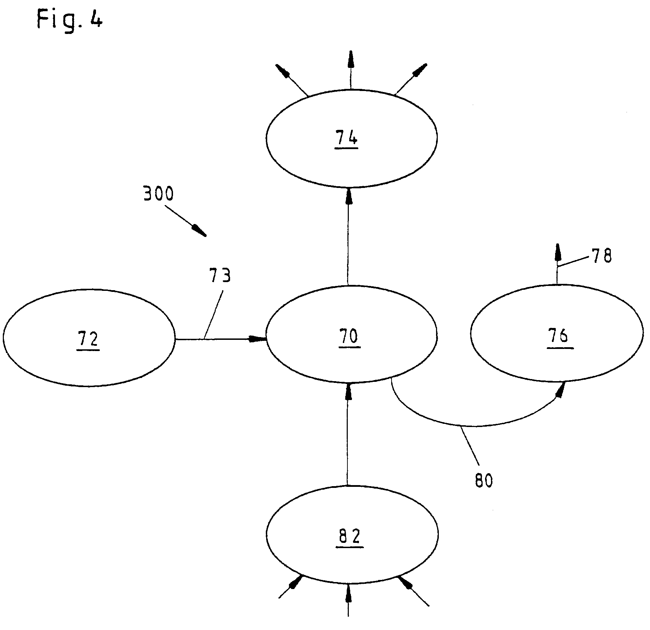

Fig. 4 zeigt schematisiert in Form eines Blockschaltbildes einen Teil eines erfindungsgemäßen Kommunikations-System 300. Ein erstes Mittel 70, beispielsweise in Form eines Kommunikationscontrollers KC oder eines Personalcomputers PC, empfängt von der Telekommunikationsanlage (TK) 72 Anmeldesignale 73 von individualisierten Endgeräten (PP) und wertet dieses ggf. aus, sofern dies nicht bereits in der TK 72 erfolgt ist. Ferner sendet das erste Mittel 70 dieses Signal 73 oder entsprechende Signale 74 an alle anderen TK oder KC, welche dadurch darüber informiert werden, daß das PP in dieser TK eingebucht ist. Ferner steuert der KC über Leitung 80 ein zweites Mittel 76 an, welches im Falle eines Verbindungswunsches, also eines Telefon- oder Paginganrufes, eine entsprechende Rufumleitungen 78 für das oder die gerade eingebuchten und angerufene PP zur jeweiligen TK realisiert. Zur Information darüber, zu welcher TK die Rufumleitung 78 vom zweiten Mittel 76 zu führen ist, hat der KC zuvor entsprechende Signale 82 aus allen anderen TK oder KC erhalten, welche entsprechenden dort jeweils eingegangenen Anmeldesignalen 73 entsprechen. Der KC 70 ist somit ständig und bezüglich des gesamten KS darüber informiert, wo bzw. in welcher TK entsprechende PP gerade angemeldet bzw. eingebucht sind. Hierbei werden die Rufumleitungen 78 dezentral von jeder TK 72 bzw. jedem KC selbst vorgenommen. Dadurch ist es nicht notwendig, alle Anrufe zuerst in eine Zentrale zu leiten, welche dann entsprechend einer zentral verwalteten Liste der PP erst eine Weiterleitung initiiert, was ein aufwendiges System sowie große Verbindungskapazitäten erfordert und dementsprechend teuer ist.

### BEZUGSZEICHENLISTE

- 100, 200, 300: Kommunikations-System KS
- 10: Kommunikationsanlage KA
- 12: Kommunikationsanlage KA
- 14: Kommunikationsanlage KA
- 16: Telekommunikationsanlage TK
- 18: Telekommunikationsanlage TK
- 20: Telekommunikationsanlage TK
- 22: Drahtapparat DA
- 24: Drahtapparat DA
- 26: Drahtapparat DA
- 28: Basisstation FP
- 30: Basisstation FP
- 32: Basisstation FP
- 34: Kommunikationscontroller KC / Personalcomputer PC
- 36: Kommunikationscontroller KC / Personalcomputer PC
- 38: Kommunikationscontroller KC / Personalcomputer PC
- 40: Leitungsnetz Telekommunikationsanlage
- 42: Leitungsnetz Kommunikationscontroller / Personalcomputer
- 44: externe Amtsleitung
- 46: externe Amtsleitung
- 48: externe Amtsleitung
- 50: individualisiertes Endgerät PP
- 52: individualisiertes Endgerät PP
- 54: individualisiertes Endgerät PP
- 56: Funkverbindung
- 58: Funkverbindung
- 60: Funkverbindung
- 62: Pfeil
- 64: Pfeil
- 66: Pfeil
- 70: erstes Mittel
- 72: Telekommunikationsanlage TK
- 73: Anmeldesignale
- 74: Signale
- 76: zweites Mittel
- 78: Rufumleitung
- 80: Leitung
- 82: Signale

## Patentansprüche

1. Kommunikations-System (100,200,300) mit mehreren, miteinander verbundenen Kommunikations-Anlagen (10,12,14), welche jeweils wenigstens eine Telekommunikationsanlage (16,18,20;72) mit wenigstens einer daran angeschlossener Basisstation (28,30,32) für wenigstens ein drahtloses Endgerät (50,52,54) umfaßt,
dadurch gekennzeichnet,
daß ein mit einer jeweiligen Telekommunikationsanlage (16,18,20;72) verbundenes erstes Mittel (34,36,38;70) vorgesehen ist, welches ein vorbestimmtes Anmeldesignal (73) eines individualisierten Endgerätes (50,52,54) aufnimmt, auswertet und an alle anderen ersten Mittel (34,36,38;70) der anderen Telekommunikationsanlagen (16,18,20;72) und/oder an alle anderen Telekommunikationsanlagen (16,18,20;72) im Kommunikations-System (100,200,300) weiterleitet sowie von allen anderen ersten Mitteln (34,36,38;72) der anderen Telekommunikationsanlagen (16,18,20;72) und/oder von allen anderen Telekommunikationsanlagen (16,18,20;72) im Kommunikations-System (100,200,300) Anmeldesignale (82) von individualisierten Endgeräten (50,52,54) aufnimmt, und daß ein zweites Mittel (76) vorgesehen ist, welches vom ersten Mittel (34,36,38;70) bei Eingang eines Verbindungswunsches zu einem individualisierten Endgerät (50,52,54) angesteuert eine Verbindung zu derjenigen Kommunikations-Anlage (10,12,14) herstellt, von welcher zuletzt ein Anmeldesignal (82) dieses individualisierten Endgerätes (50,52,54) eingegangen ist.

2. Kommunikations-System (100,200,300) nach Anspruch 1,
dadurch gekennzeichnet,
daß das erste Mittel (70) ein Kommunikationscontroller (34,36,38), insbesondere ein Personalcomputer (34,36,38) ist.

3. Kommunikations-System (100,200,300) nach Anspruch 1 oder 2,
dadurch gekennzeichnet,
daß das zweite Mittel (76) eine Rufumleitung ist.

4. Kommunikations-System (100,200,300) nach einem der vorhergehenden Ansprüche,
dadurch gekennzeichnet,
daß das Endgerät (50,52,54) über eine individuelle Telefonnummer in dem Kommunikations-System (100,200,300) individualisiert ist.

5. Kommunikations-System (100,200,300) nach einem der vorhergehenden Ansprüche,
dadurch gekennzeichnet,
daß jede Kommunikations-Anlage (10,12,14) zusätzlich wenigstens einen Drahtapparat (22,24,26) aufweist.

6. Kommunikations-System (200) nach einem der Ansprüche 2 bis 5,
dadurch gekennzeichnet,
daß die Kommunikationscontroller (34,36,38) in einem draht- oder funkgestützten Datennetz (42) miteinander verbunden sind.

7. Kommunikations-System (100,200,300) nach einem der vorhergehenden Ansprüche,
dadurch gekennzeichnet,
daß wenigstens eine, insbesondere alle, Telekommunikationsanlagen (16,18,20) mit wenigstens einer externen Amtsleitung (44,46,48) verbunden sind.

8. Kommunikations-System (100,200,300) nach einem der vorhergehenden Ansprüche,
dadurch gekennzeichnet,
daß wenigstens zwei, insbesondere alle, Telekommunikationsanlagen (16,18,20;72) über ein draht- oder funkgestütztes Netz (40) miteinander verbunden sind.

9. Kommunikations-System (100,200,300) nach Anspruch 8,
dadurch gekennzeichnet,
daß das Netz (40) ein ISDN-Netz ist.

10. Kommunikations-System (100,200) nach einem der vorhergehenden Ansprüche,
dadurch gekennzeichnet,
daß der Verbindungswunsch ein Telefonanruf, ein Paginganruf und/oder ein Datenanruf ist.

11. Kommunikations-System (100,200) nach einem der vorhergehenden Ansprüche,
dadurch gekennzeichnet,
daß das zweite Mittel (76) eine "Follow-Me"-Funktion ist.

12. Kommunikations-System nach einem der Ansprüche 1 bis 11,
dadurch gekennzeichnet,
daß das Endgerät (50, 52, 54) ein DUAL-MODE-Gerät ist, das sowohl über das DECT-System als auch über das Funkrufsystem erreichbar ist.

13. Kommunikations-System nach einem der Ansprüche 1 bis 11,
dadurch gekennzeichnet,
daß das Endgerät (50, 52, 54) ein DUAL-MODE-Gerät ist, das sowohl über das DECT-System als auch über das GSM-System erreichbar ist.

14. Verfahren zum Betreiben eines Kommunikations-Systems mit mehreren, miteinander verbundenen Kommunikations-Anlagen, welche jeweils wenigstens eine Telekommunikationsanlage mit wenigstens einer daran angeschlossener Basisstation für wenigstens ein drahtloses Endgerät aufweisen,
gekennzeichnet durch folgende Schritte,
(a) Aussenden eines Anmeldesignals von einem individualisierten Endgerät an eine erste Telekommunikationsanlage einer ersten Kommunikations-Anlage, in dessen Funkbereich sich das individualisierte Endgerät momentan befindet, und
(b) Aktivieren einer Rufumleitung in allen anderen, mit der ersten Kommunikations-Anlage verbundenen Kommunikations-Anlagen.

15. Verfahren nach Anspruch 14,
dadurch gekennzeichnet,
daß das Aussenden in Schritt (a) automatisiert oder manuell erfolgt.
